# EUROPEAN PATENT APPLICATION

(11) **EP 1 830 294 A1**
(43) Date of publication of application: **05.09.2007**
(21) Application number: 06290042.8
(22) Date of filing: 05.01.2006
(51) Int. Cl.: G06F 21/00

(54) **Licence protection system, billing system therewith, and method for licensing a software**

(71) Applicant: Alcatel Lucent, 75008 Paris (FR)
(72) Inventor: Daase, Detlef, 12205 Berlin (DE); Kaufmann, Heinz-Peter, 12109 Berlin (DE)
(74) Representative: Kohler Schmid Möbus

(57) **Abstract**

A license protection system for licensing a software installation comprising a license server and an installed software, preferably a billing software, wherein the license server stores encrypted license information for the software, and the software comprises a retrieval means for retrieving license information from said license server and a decryption means for decrypting the license information is characterised in that the license information contains a volume limit for the use of said software, the software comprises measurement means for measuring the volume of use of the software and control means for allowing the use of the software depending on said volume limit. The volume limit is preferably a data limit per time unit (T), corresponding to an amount of data (23) processed by the software per time unit.

## Description

### Background of the invention

The invention relates to a license protection system for licensing a software installation comprising a license server and an installed software, preferably a billing software, wherein the license server stores encrypted license information for the software, and the software comprises a retrieval means for retrieving license information from said license server and decryption means for decrypting the license information.

Such a license protection system is known, for example, from JP 2002-108482, or US patent application No. US 2002/129265 A1.

License protection systems have been established in order to manage the rights to use of software, namely licenses, and in particular to prevent the illegal use of software. License protection systems are based on storage of encrypted license information for software on a license server, the connection of said license server to a location whereon the software is installed being compulsory for operation of the software on said location. The license server is, for instance, a hardware dongle (e.g. devised as a USB stick) and may be distributed separately from the software. In a first step, a retrieval means comprised by the software allows for retrieving license information from said license server, and in a second step, a decryption means comprised in the software likewise allows for decrypting the license information. Both steps together enable operation of the software. As a consequence, operation of the software is inhibited as long as a license server containing appropriate license information is absent. Thus, illegal copying of the software is made ineffective.

A license protection system of the above-mentioned kind may be used for licensing a billing software installation embedded, for instance, in a telecommunications network of a telecommunications service provider. The data processed by the billing software is associated typically with calls on telecommunications links between network elements. A processing of data by the billing software is relevant for billing calls on said telecommunications links and consequently essential for the profitability of such a telecommunications network. In this context, a license provider distributing a billing software for a billing system of a telecommunications network may want to attribute licenses of different levels (and prices) being adapted to the performance of a particular telecommunications service provider and to change the license level in case of changes in the performance of that provider.

### Object of the invention

It is the object of the invention to provide a license protection system which is capable of restricting the use of a software in dependence of a license information stored in the license server.

### Short description of the invention

This object is achieved, in accordance with the invention, by a license protection system of the above-mentioned kind wherein the license information contains a volume limit for the use of said software, the software comprises measurement means for measuring the volume of use of the software and control means for allowing the use of the software depending on said volume limit. Depending on the measured volume and on the volume limit given by the license information, the control means enables or disables operation of the software and, consequently, a processing of data by the software. Operation of the software is permitted as long as the measured volume does not reach the volume limit. Thus, the license protection system allows for a volume-dependent use of that software.

In this way, it is possible to distribute licenses for a software in accordance with the volume of data processed by the software within a specific application, and at the same time to restrict the use of a software to a volume limit specific to said application.

In a further embodiment, the volume measured by the measurement means is an amount of data processed, preferably transferred or exchanged, by the software, and the volume limit contained in the license information is a data limit per time unit, corresponding to an amount of data processed by the software per time unit.

In contrast to an absolute amount of data processed by the software, a time-dependent volume measurement and volume limit, respectively, are adaptable to the application of a software which performs processing operations which are typically time-dependent, so that a time-dependent license volume limit, namely a maximal amount of data processed per time unit, is necessary. The duration of the time unit may be chosen to be e.g. several hours, a day, a week etc., depending on the specific application. In case of a billing system of a telecommunications network wherein calls are made preferably between locations in the same time zone, it may be preferable to choose a day as a time unit, and selecting a changeover time between subsequent time units in the night time (e.g. midnight) when the volume of data traffic is comparatively low.

In a highly preferred embodiment, the software comprises a storage means for storing data not processed by the software in the current time unit due to an overflow of the volume limit, and the control means effects a processing of data stored in the storage means in the subsequent time unit, preferably in the case of an underflow of the volume limit.

In this way, a tolerance mechanism is implemented in the license protection system. Data not processed immediately, i.e. in the current time unit, by the software due to an exceeding of the license volume limit is stored in a storage means. A processing of said stored data takes place in a subsequent time unit. This mechanism induced by the control means has the advantage that no data gets lost or remains un-processed.

It is possible to start with the processing of the stored data in the subsequent time unit before processing the amount of data occurring during that time unit. Alternatively, it is possible to check if the volume limit in the subsequent time unit is not fully exhausted, and to process the stored data only in case that the volume limit of that time unit is not exceeded. Each implementation of said tolerance mechanism ensures a particularly high utilization of the volume capacities provided for a plurality of time units by shifting processing volumes between different time units.

In a further development of said license protection system the control means detects an overflow of the volume limit over a plurality of succeeding time units and generates a license insufficiency warning.

In combination with a tolerance mechanism as discussed above, said license insufficiency warning mechanism prevents a remaining of data stored in the storage device for several succeeding time units. In this case, a processing of intermediately stored data within a short time range is impossible due to an insufficiency of the volume provided for each time unit. The free volume capacities of subsequent time units are insufficient for a processing of the stored data volume in this case. The resulting license insufficiency is detected as well as indicated by the license protection system. Another criterion for generating a license insufficiency warning is, for example, the storage of data in the storage device wherein the amount of stored data already exceeds the volume limit of the next time unit.

A license insufficiency warning mechanism as additional feature serves for matching the amount of data processed by the software and the volume limit corresponding to the license in such a way that repeated successive exceeding of the volume limit is detected and indicated by the license protection system. This warning mechanism permits the user of the software to make modifications, e.g. upgrades of the license software and, thus to adapt the license to the specific rate of use of the software.

In a preferred embodiment of the invention the license server is a hardware dongle and the software is installed on a central server. The use of a hardware dongle, for instance an USB stick, as a license server is advantageous due to its comparatively small dimensions and widespread use which allows for an easy handling, namely distribution, input and output, of the license server in almost any computer hardware available today. The software is preferably installed on a central server whereto the hardware dongle is connected. A change, mostly an upgrade, of the license is realized by a replacement of the hardware dongle with another hardware dongle storing the required license information and, in particular, the required volume limit.

Also within the scope of the invention is a billing system of a telecommunications network comprising a license protection system according to the invention, a billing server whereon the software is installed, a media gateway controller and preferably a billing center wherein the software receives data records from the media gateway controller and transfers data to the billing center, and a volume of data transferred from the billing server to the billing center is limited and controlled by the license protection system.

Telecommunications networks enable communication between at least two network elements through telecommunications links. The data flows in these links, e.g. due to phone calls, are controlled and recorded by a media gateway controller. For each telecommunications call within the telecommunications network, a separate data record is generated by the media gateway controller and filed to a billing server. The billing server is as well as the billing center part of the billing system of the telecommunications network. The data filed on the billing server contain information like participating network elements, time duration and data rate of a respective telecommunications call so that said data provide a basis for invoicing a respective telecommunication call. Invoicing, i.e. processing of said data to generate a bill which can be sent to a respective user of the telecommunications network takes places in the billing center.

For the purpose of transferring of data filed from the billing server to the billing center, a software is installed on the billing server. Operation of the software is essential for a billing of the telecommunications links within the telecommunications network and, thus, for profitability of the telecommunications network. As a consequence, a license protection system protecting a software tool embedded in the billing system of a telecommunications network protects the installation of a profitable telecommunications networks as a whole. The volume of data transferred from the billing server to the billing center where said data are further processed to generate the bills is controlled by the volume limit of the license. The licence volume limit and the license server, respectively, may be adapted to the requirements of a specific telecommunications network. A double protection can be achieved within said billing system in such a way that the hardware dongle protects the billing server and the billing server protects the media gateway controller.

A storage means comprised in the billing server allows for a storage of data received from the media gateway controller and not transmitted immediately to the billing center due to an overflow of the volume limit for the current time unit provided by the license. In this way, a recording and storing of data relevant for billing takes places regardless of the availability of an appropriate license volume. In view of considerable fluctuations of the number of telecommunications links and respective data records between different time units, for instance hours or week days, said tolerance mechanism enables balancing of a provided transfer volume over periods comprising a plurality of time units. This feature also allows for an adjusting of the license volume limit to the average value of required volume capacities. In case of an overflow of the licensed volume limit, a billing of the respective telecommunications links is effected including a time delay. In order to restrict said time delay to one or a few time units, a license insufficiency warning as described before is provided by the license protection system.

An implementation of license information may embed a mapping table mapping logical throughput steps to absolute throughput levels. This feature allows for immediate and simple upgrades of the software license such that additionally required license levels, i.e. license volume capacities, are unlocked by the input of supplementary passwords or likewise license keys.
In addition to this, the volume given by the license information and controlled by the license protection system, respectively, is not necessarily a rate measured in byte, said volume also can relate to the number of data records, e.g. CDR quantities. This feature adapts to an application of a license protection system in a billing system for a telecommunications network.

Further within the scope of the invention is a method for licensing a software comprising a first step of retrieving an encrypted license information from a license server wherein the license information contains a volume limit for the use of said software per time unit, a second step of decrypting the license information, a third step of measuring a volume of use of the software and, finally, a fourth step of controlling and limiting the use of the software depending on said volume limit.

The method realizes a number of advantages: The license information stored in a license server is retrieved when and where it is needed. As a consequence, an input of a license key by a user of the software is no longer necessary. The license information is encrypted so that the software is secured from copying and counterfeiting. The measurement of a volume of use allows an operation of the software, i.e. a processing of data, in particular a transfer or exchange of data by the software in the license volume limit.

A preferred variant of the inventive method comprises a fifth step of detecting an overflow of the volume limit over a plurality of succeeding time units and preferably generating a license insufficiency warning. The additional step of detection and indication of an insufficiency of the license volume capacities allows for an adaptation of the license volume limit to the requirements of a specific software application.

Also within the scope of the invention is a computer program product implementing the inventive method.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows an block diagram of an exemplary implementation of a license protection system in a billing system of a telecommunications network;
- Fig. 2: shows a schematic diagram of volume profiles measured over three subsequent time units illustrating a tolerance mechanism provided by a license protection system.

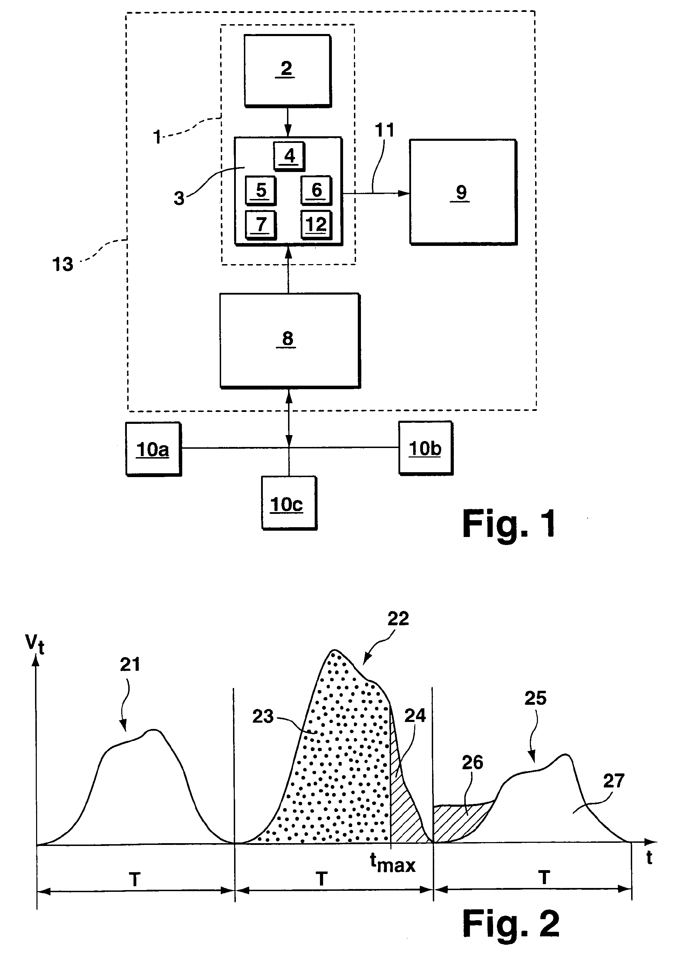

**Fig. 1** shows a schematic structure of a telecommunications network wherein a license protection system **1** is implemented. The license protection system **1** comprises a license server **2** and a billing server **3.** The license protection system **1** serves for licensing of a billing software installation, said billing software being installed on the billing server **3.** Encrypted license information for the billing software is stored on the license server **2** which is preferably a hardware dongle, e.g. a USB stick. For the purpose of retrieving the license information from the license server **2,** the billing software comprises a retrieval means **4,** and a decryptions means **5** for the purpose of decrypting the license information. The license information contains a volume limit for the use of the billing software. Said use is measured by a measurement means **6** comprised in the software. Operation of the billing software depending on the license volume limit is controlled, i.e. enabled or disabled, by a control means **7** comprised by the billing software.

Beside the license server **2,** the billing server **3** is connected to a media gateway controller **8** and a billing center **9,** forming a billing system **13** together with the licence protection system **1.** The media gateway controller **8** controls and records telecommunications links within the telecommunications network. In the figure, only three network elements **10a, 10b, 10c** are shown being connected with each other and with the media gateway controller **8.** According to calls over the telecommunications links between two or more of the network elements **10a, 10b, 10c,** the media gateway controller **8** generates a data record and files it to the billing server **3.** The billing software provides a transfer of the data records to the billing center **9** where bills are generated according to respective data records.

The license protection system **1** sets a volume limit for the data processed by the billing software, namely the amount of data transferred from the billing server **3** to the billing center **9.** The direction of said data transfer is indicated in Fig. 1 by arrow **11.** The volume limit is time-dependent giving a limit for an amount of data processed by the software per time unit. Typical time units for telecommunications networks are minute, hour or day. A respective license not only ensures operation of the billing software on the billing server **3** but also restricts the data rate transferred to the billing center **9.** As a consequence, the license protection system **1** controls the functioning of the billing system of the telecommunications system.

For the purpose of storing data filed by the media gateway controller **8** to the billing server **3** but not processed by the billing software due to a lack of available license volume, the billing software installation comprises a storage means **12.** A tolerance mechanism is implemented in the license protection system **1,** such that the control means **7** effects a processing, namely a forwarding to the billing center **9,** of data stored in the storage means **12** in subsequent time units, in particular when free license volume is available, as will be explained in greater detail below. In addition to this, a license insufficiency warning mechanism is implemented in the license protection system **1.** For this purpose, an overflow of the volume limit over a plurality of succeeding time units is detected by the control means **7** which generates, in this case, a license insufficiency warning. Such a warning permits the provider of a telecommunications network to adapt the license for the billing software to the data rates occurring in the specific use of the telecommunications network. Changes and upgrades of said license for the billing software are effected by an exchange of respective license servers **2** devised as hardware dongles. Alternatively, it is possible to store license information with different license limits on the license server **2** which may be activated e.g. by an operator providing new passwords to the license server via the billing server **3.** Alternatively, the overflow of the license limit may be observed by a server (not shown) appertaining to the provider of the billing software which activates a new license level through a communication with the billing server **3.**

**Fig. 2** shows a diagram of exemplary volume profiles measured by a measurement means of a license protection system according to Fig. 1 over three time units with the object of demonstrating a tolerance mechanism as explained above. The diagram is a plot of a data rate Vₜ, i.e. an amount of data over time t. The time scale is divided in time units each with a period T being equal to one day, the changeover from one time unit to another being performed at midnight. The integral over time t of the data rate Vₜ starting from the beginning of a respective time unit T to a present time, i.e. the area enclosed by the plot and the time axis between these two time instants, defines an amount of data which is compared to the volume limit defined by the license software in order to constrain the volume processed by the software during the respective time unit. Thus, depending on a comparison of said measured amount resp. volume of data to the license volume limit, operation and functioning of the licensed software are controlled and limited by a control means.

A volume profile **21** measured during a first time unit does not exceed a license volume limit. In contrast to this, a second time unit exhibits an overflow of the volume limit, as a volume profile **22** of the second time unit is composed of a first (dotted) area **23** corresponding to an amount of data corresponding to the volume limit and a second (hatched) area **24** corresponding to overflow data. The volume limit is reached at a time **tₘₐₓ** when an amount of data of e.g. 50 MByte is reached. Data provided to the billing server 3 from the time tₘₐₓ to the end of the second time unit is not processed by the software and stored in the storage means 12. A data volume **25** processed by the software during a third time unit comprises data stored in the storage means illustrated in a hatched area **26** and data processed immediately by the software indicated by a further, transparent area **27.** The hatched area **26** of the third time unit has a surface corresponding to the one of the second area **24** of the second time unit. This illustrates that all data stored in the storage means during the second time unit are processed during the third time unit.

In the example illustrated in Fig. 2 all arriving data is processed immediately by the software in the available license volume, until the volume limit is reached. Data stored in the storage means is processed additionally, up to a pre-defined limit of the data rate. Once the volume limit is reached, all processing by the software is stopped and arriving data is rerouted to the storage device. However, there exist several ways of sharing the available volume between stored data and data arriving from the media gateway controller. One variation is a continual processing of a fixed data rate wherein overflowing data is stored in the storage means and only in case of an underflow of said fixed data rate, data stored in the storage means is processed. Another variation consists of a processing of data in chronological order according to the first in - first out principle. In case of an empty storage device, all data is processed immediately by the software.

In summary, the invention provides a limitation for the use of a software depending on a volume limit, thus allowing a software provider to select an appropriate license for a given application through distributing licenses with different volume limits. A repeated overflow of the license limit may be observed and appropriate measures may be taken, in particular the change of a license level of the software.

## Claims

1. A license protection system (1) for licensing a software installation comprising a license server (2) and an installed software, preferably a billing software,
wherein the license server (2) stores encrypted license information for the software, and
the software comprises a retrieval means (4) for retrieving license information from said license server (2) and a decryption means (5) for decrypting the license information,
**characterized in that**
the license information contains a volume limit for the use of said software, the software comprises measurement means (6) for measuring the volume of use of the software and control means (7) for allowing the use of the software depending on said volume limit.

2. The license protection system (1) according to claim 1,
**characterized in that**
the volume measured by the measurement means (6) is an amount of data processed, preferably transferred or exchanged, by the software, and
the volume limit contained in the license information is a data limit per time unit, corresponding to an amount of data (23) processed by the software per time unit.

3. The license protection system (1) according to claim 2,
**characterized in that**
the software comprises a storage means (12) for storing data not processed by the software in the current time unit due to an overflow of the volume limit, and
the control means (7) effects a processing of data stored in the storage means (12) in a subsequent time unit, preferably in the case of an underflow of the volume limit in the subsequent time unit.

4. The license protection system (1) according to claim 3,
**characterized in that**
the control means (7) detects an overflow of the volume limit over a plurality of succeeding time units and generates a license insufficiency warning.

5. The license protection system (1) according to claim 1
wherein the license server (2) is a hardware dongle and
the software is installed on a central server.

6. Billing system (13) for a telecommunications network comprising
a license protection system (1) according to claim 1,
a billing server (3) whereon the software is installed,
a media gateway controller (8), and
preferably a billing center (9)
wherein the software receives data records from the media gateway controller (8) and transfers data to the billing center (9), and
a volume of data transferred from the billing server (3) to the billing center (9) is limited and controlled by the license protection system (1).

7. A method for licensing a software comprising the following steps
(a) retrieving an encrypted license information from a license server (2)
wherein the license information contains a volume limit for the use of said software per time unit,
(b) decrypting the license information,
(c) measuring a volume of use of the software,
(d) controlling and limiting the use of the software depending on said volume limit.

8. The method for licensing a software according to claim 7
comprising the additional step of
(e) detecting an overflow of the volume limit over a plurality of succeeding time units and preferably generating a license insufficiency warning.

9. A computer program product implementing the method according to claim 7.

## Amended claims

### Amended claims in accordance with Rule 86(2) EPC.

**1.** A license protection system (1) for licensing a billing software installation comprising a license server (2) and a billing software installed on a billing server (3),
wherein the license server (2) can be connected to the billing server (3) and stores encrypted license information for the billing software, and the billing software comprises a retrieval means (4) for retrieving license information from said license server (2) and a decryption means (5) for decrypting the license information,
**characterized in that**
the license information contains a volume limit for the use of said billing software,
the billing software comprises measurement means (6) for measuring the volume of use of the billing software and control means (7) for allowing the use of the billing software depending on said volume limit,
the volume measured by the measurement means (6) is an amount of data processed by the billing software, and
the volume limit contained in the license information is a data limit per time unit, corresponding to an amount of data (23) processed by the billing software per time unit.

**2.** The license protection system (1) according to claim 1,
**characterized in that**
the billing software comprises a storage means (12) for storing data not processed by the billing software in the current time unit due to an overflow of the volume limit, and
the control means (7) effects a processing of data stored in the storage means (12) in a subsequent time unit.

**3.** The license protection system according to claim 2,
**characterized in that**
the control means (7) effects a processing of said stored data in the case of an underflow of the volume limit in the subsequent time unit.

**4.** The license protection system (1) according to claim 3,
**characterized in that**
the control means (7) detects an overflow of the volume limit over a plurality of succeeding time units and generates a license insufficiency warning.

**5.** The license protection system (1) according to claim 1
wherein the license server (2) is a hardware dongle.

**6.** Billing system (13) for a telecommunications network comprising
a license protection system (1) according to claim 1,
a media gateway controller (8), and
a billing center (9)
wherein the billing software receives data records from the media gateway controller (8) and transfers data to the billing center (9), and
a volume of data transferred from the billing server (3) to the billing center (9) is limited and controlled by the license protection system (1).

**7.** A method for licensing a billing software comprising the following steps
(a) retrieving an encrypted license information from a license server (2)
(b) decrypting the license information, **characterized in that**
the license information contains a volume limit for the use of said billing software per time unit
and by the additional steps:
(c) measuring a volume of use of the billing software,
(d) controlling and limiting the use of the billing software depending on said volume limit.

**8.** The method for licensing a billing software according to claim 7
comprising the additional step of
(e) detecting an overflow of the volume limit over a plurality of succeeding time units and generating a license insufficiency warning.

**9.** A computer program product implementing the method according to claim 7.
